# EUROPEAN PATENT SPECIFICATION

(11) **EP 1 698 760 B1**
(45) Date of publication and mention of the grant of the patent: **25.06.2008**
(21) Application number: 06250888.2
(22) Date of filing: 20.02.2006
(51) Int. Cl.: F01D 5/30, F01D 5/22

(54) **Torque-tuned, integrally-covered bucket and related method**
Mit Deckband und definierter Verdrehung versehene Turbinenschaufel und entsprechendes Verfahren
Aube de turbine avec virole comprenant une torsion ajustée et procédé correspondant

(30) Priority: 25.02.2005 US 65039
(43) Date of publication of application: 06.09.2006
(73) Proprietor: General Electric Company, Schenectady, NY 12345 (US)
(72) Inventor: Caruso, David Alan, New York 12019 (US); Serafini, Mark Joseph, New York 12308 (US)
(74) Representative: Bedford, Grant Richard

(56) References cited:
- US-A- 5 509 784
- US-A1- 2004 165 989

## Description

This invention relates generally to steam turbine technology, and specifically, to an integrally covered bucket blade with a torque zone in the solid shank area radially between the dovetail mounting portion and the airfoil portion of the bucket.

Turbine blades, often referred to as buckets, are subject to vibrational stresses that can impact engine efficiency and part life. To reduce these stresses, a number of ways of damping or limiting bucket vibrations have been devised. One approach is to frictionally dampen certain modes of vibrations by interlocking the tips of covered or tip-shrouded buckets. To dampen vibratory stimuli and control natural frequencies, the integral covers or shrouds of the buckets must maintain contact from bucket to bucket within an annular row. To create the requisite interlock, the airfoil or blade portions are twisted during assembly. This pre-twist is in a circumferential direction as viewed along the long axis of the respective bucket. During operation, centrifugal forces will cause radial growth and twisting of the bucket blade portions, tending to open circumferential gaps between the blade tip covers. Thus, the covers must be assembled with enough compressive contact force between the respective adjacent buckets to provide residual force during operation despite the effects of centrifugal forces. The greater the interference required, the greater the required angle of rotation.

In other words, the present method of assembling integrally covered buckets is to twist the airfoil portion of each bucket so that the pitch of the tip cover (or simply, "cover") decreases, allowing an entire row of buckets to be placed on the rotor. The inherent torque of the airfoil portion then causes the cover to untwist which produces a residual interference that keeps the row of buckets coupled during operation.

The torque characteristics of the airfoil portion of the bucket may preclude the use of an integral tip cover, however, if the torque characteristics of the airfoil portion do not provide for the desired coupling face pressure at the integral bucket tip covers.

US 5,509,784 discloses a turbine bucket and wheel assembly with an integral bucket shroud.

The present invention seeks to disassociate the torque characteristics of the airfoil portion of the bucket from the determination of sufficient bucket cover coupling. In the exemplary embodiment, this is achieved by designing the shank area of the bucket with a specific cross-sectional shape that will achieve a desired torque characteristic for the bucket as a whole in order to obtain the desired contact pressure at the cover coupling facings. In other words, the degree of pre-twist needed to achieve the desired tip cover interference is applied in a torque zone spaced from the airfoil portion rather than in the airfoil portion proper. Various suitable geometrical cross sections that may be utilized to achieve the desired end result can be obtained by machining material away from the solid shank area above the dovetail mounting portion of the bucket.

For example, the torque zone may take the form of a reduced cross-sectional area of circular shape. Other cross-sectional shapes disclosed herein include substantially N-shaped; H-shaped; elongated rectangle-shaped arranged parallel to, at an angle to, or perpendicular to the fore and aft bucket platform edges; and other more complex shapes described further herein. The invention is not limited, however, to the specific shapes disclosed, but also includes other reduced cross-sectional configurations that create a torque zone that allows the desired pre-twist for tip cover coupling to be applied in the torque zone, without having to separately pre-twist the airfoil portion of the bucket.

Accordingly, in one aspect, the present invention relates to a turbine bucket as defined in appended claim 1.

In another aspect, the present invention relates to method of disassociating torque characteristics of an airfoil portion of a turbine bucket from contact pressure at coupling faces of adjacent integral bucket tip covers as defined in appended claim 6.

Various embodiments of the invention will now be described in connection with the drawings identified below, in which:.
FIGURE 1 illustrates a front elevation of a steam turbine bucket in accordance with an exemplary embodiment of the invention;
FIGURE 2 is a top plan view of the bucket shown in Figure 1;
FIGURE 3 is a simplified cross section taken through the line 3-3 of Figure 1;
FIGURES 4-12 represent alternative cross-sectional shapes as viewed from a section line located in the same plane as section line 3-3 of Figure 1.

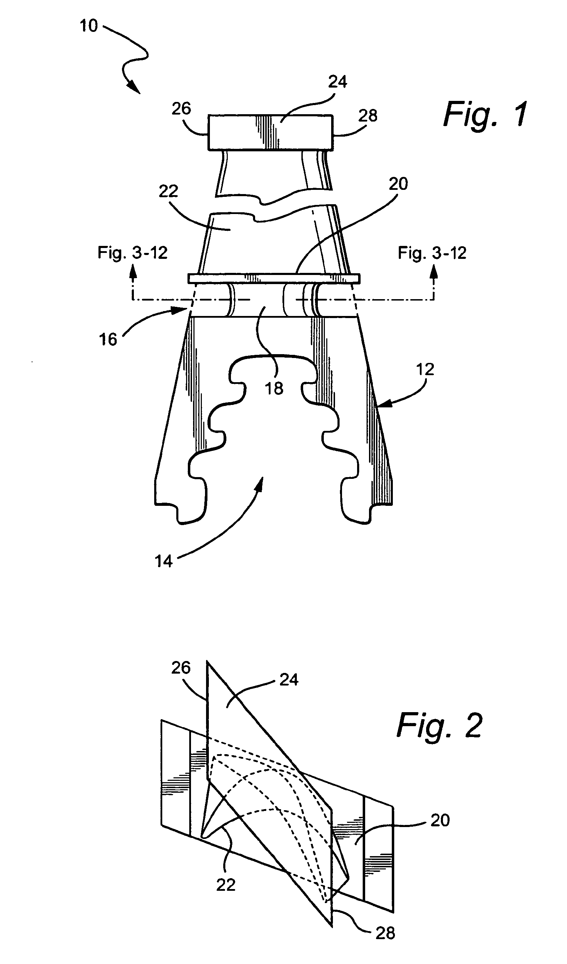

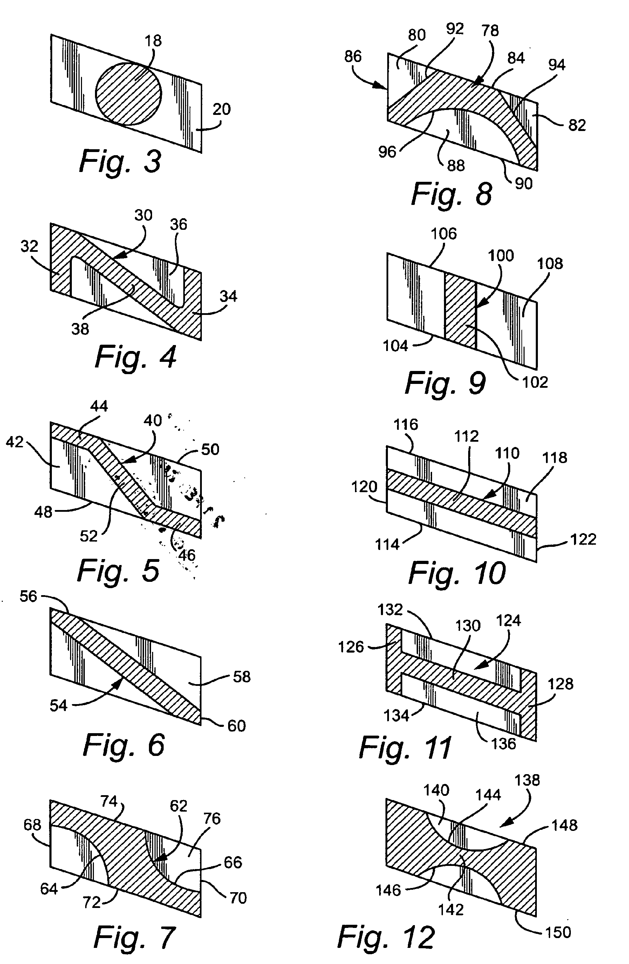

With reference initially to Figure 1, a steam turbine bucket 10 in accordance with an exemplary embodiment of the invention is formed with a lower dovetail mounting portion 12 including a conventional dovetail slot or groove 14. Adjacent the dovetail mounting portion 12 (in a radially outward direction) is a solid shank portion 16 which has been machined in accordance with an embodiment of the invention to provide a torque zone 18 located radially between the dovetail portion 12 and the bucket platform 20. Extending radially away from the bucket platform is the airfoil portion 22 that is formed with an integral tip cover 24. In this first embodiment, the shank portion 16 has been machined to produce a torque zone 18 that has a reduced, circular cross-sectional shape as seen in Figure 3. The amount of material machined away from the shank portion is determined by the desired torque characteristics for the bucket 10. The torque characteristics, in turn, are chosen in order to obtain the desired contact pressure at the coupling faces, i.e., where surfaces 26, 28 (Figure 2) of the integral cover 24 engages similar cover surfaces of adjacent buckets.

It will be appreciated that various other geometrical cross sections may be applied to the torque zone. For example, Figure 4 illustrates a torque zone 30, located radially between a dovetail portion and platform 32, that is substantially N-shaped in cross section. More specifically, the modified shank portion includes sides 32, 34 that are parallel to the end edges of the platform 36 and a diagonal web 38 therebetween.

In Figure 5, the torque zone 40, located radially between the dovetail mounting portion and the platform 42, includes portion 44, 46 on pressure and suction sides 48, 50 of the platform 42 connected by a diagonal portion or web 52.

In Figure 6, the shank portion 16 has been machined to produce a torque zone 54 of substantially rectangular shape in cross section, extending diagonally from one corner 56 of the platform 58 to an opposite corner 60 thereof.

In Figure 7, a generally diagonally-oriented torque zone 62 is defined by oppositely-facing curved surfaces 64, 66, each of which extend between ends 68, 70 and adjacent sides 72, 74, respectively, of the platform 76.

In Figure 8, a torque zone 78 is formed by machining material away from two corner areas 80, 82 on the suction side 84 of the shank portion, below platform 86, and a radiused middle portion 88 from the opposite pressure side 90 of the shank portion. More specifically, the torque zone 78 is defined by diagonal edges 92, 94 that define the corner areas 80, 82, and a curved edge 96 that intersects platform side edge 90 at both ends thereof.

In Figure 9, the torque zone 100 is formed as a generally rectangular web 102 extending substantially perpendicular to opposite suction side edge 104 and pressure side edge 106 of the platform 108.

In Figure 10, the torque zone 110 is formed by a generally rectangular web 112 extending substantially parallel to pressure and suction side edges 114, 116, respectively, of the platform 118, between opposite ends 120, 122.

Figure 11 shows a torque zone 124 that is substantially H-shaped in cross section, including end regions 126, 128 connected by a middle cross-web 130 extending parallel to pressure and suction side edges 132, 134 of the platform 136.

In Figure 12, the torque zone 138 has a cross section similar to a corresponding cross section of the adjacent platform 140 but with a narrow neck area 142 defined by opposed arcuate surfaces 144, 146 machined away from the torque zone, and opening towards respective suction and pressure side edges 148, 150 of the platform 140.

As indicated above, other cross-sectional shapes for the torque zone in the bucket shank portion are also contemplated in various embodiments of the invention, so long as the torque characteristics of the bucket as a whole provide the desired coupling of adjacent integral tip covers without having to apply torque to the respective airfoil portions.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A turbine bucket (10) comprising a shank portion (16), an adjacent and radially inner dovetail mounting portion (12), an adjacent and radial outer airfoil portion (22), with a platform (20) at a radially inner end of said airfoil portion adjacent said shank portion, and an integral cover (24) at a radially outer tip of the airfoil portion, **characterized in that**:
the shank portion is shaped to provide a reduced cross-sectional torque zone (30) in said shank portion (16), located radially between the dovetail mounting portion (12) and the platform (20), the torque zone (30) establishing a desired torque characteristic for the bucket to create, upon insertion into a dovetail groove on a turbine wheel, a desired contact pressure between said integral cover (24) and adjacent covers in a row of similar buckets when applying torque only in said torque zone (30).

2. The turbine bucket of claim 1 wherein the torque zone (30) of the shank portion (16) has a cross-sectional area smaller than said platform (22) and said dovetail mounting portion (12) on opposite sides of said torque zone.

3. The turbine bucket of claim 1 or claim 2 wherein said torque zone (30) is circular in cross section.

4. The turbine bucket of claim 1 or claim 2 wherein said torque zone (110) is rectangular in cross section, extending substantially parallel to opposite suction and pressure sides (114, 116) of said platform.

5. The turbine bucket of claim 1 or claim 2 wherein said torque zone (100) is rectangular in cross section, extending substantially perpendicular to opposite suction and pressure sides (104, 106) of said platform.

6. A method of disassociating torque characteristics of an airfoil portion (22) of a turbine bucket (10) from contact pressure at coupling faces of adjacent integral bucket tip covers (24) comprising:
(a) determining a desired degree of contact pressure at coupling faces of tip covers (24) of adjacent buckets; and **characterised by**:
(b) forming a reduced cross-sectional area torque zone (30) in a solid shank portion (16) of each bucket, located radially between a bucket dovetail mounting portion (12) and a bucket platform (20) adjacent the airfoil portion; and
(c) during assembly of a plurality of said turbine buckets on a rotor wheel, applying torque only in said torque zone (30) to achieve the desired contact pressure at the coupling faces of the tip covers.

7. The method of claim 6 wherein the torque zone (30) of the shank portion (16) has a cross-sectional area smaller than said platform (20) and said dovetail mounting portion (12) on opposite sides of said torque zone.

8. The method of claim 6 or claim 7 wherein said torque zone (30) is circular in cross section.

9. The method of claim 6 or claim 7 wherein said torque zone (124) is rectangular in cross section, extending substantially parallel to opposite suction and pressure sides (114, 116) of said platform.

10. The method of claim 6 or claim 7 wherein said torque zone (100) is rectangular in cross section, extending substantially perpendicular to opposite suction and pressure sides (104, 106) of said platform.

## Patentansprüche

1. Turbinenschaufel (10), umfassend einen Schaftteil (16), einen benachbarten, radial einwärts liegenden Schwalbenschwanz-Montageteil (12), einen benachbarten, radial auswärts liegenden Schaufelblattteil (22) mit einer Plattform (20) an einem radial einwärts liegenden Ende dieses dem Schaftteil benachbarten Schaufelblattteils und ein integriertes Deckband (24) an einer radial äußeren Spitze des Schaufelblattteils, **dadurch gekennzeichnet, dass**:
der Schaftteil so geformt ist, dass in dem Schaftteil (16) ein Torsionsbereich (30) mit reduziertem Querschnitt entsteht, der radial zwischen dem Schwalbenschwanz-Montageteil (12) und der Plattform (20) angeordnet ist, wobei der Torsionsbereich (30) einen gewünschten Drehmomentverlauf für die Schaufel herstellt, um beim Einsetzen der Schaufel in einen Schwalbenschwanzschlitz auf einem Turbinenrad einen gewünschten Kontaktdruck zwischen dem integrierten Deckband (24) und benachbarten Deckbändern in einer Reihe gleicher Schaufeln zu erzeugen, wenn ausschließlich der genannte Torsionsbereich (30) mit einem Drehmoment beaufschlagt wird.

2. Turbinenschaufel nach Anspruch 1, wobei der Torsionsbereich (30) des Schaftteils (16) einen Querschnittsbereich aufweist, der kleiner als die Plattform (20) und der auf der gegenüberliegenden Seite des Torsionsbereichs angeordnete Schwalbenschwanz-Montageteil (12) ist.

3. Turbinenschaufel nach Anspruch 1 oder 2, wobei der Torsionsbereich (30) einen kreisförmigen Querschnitt aufweist.

4. Turbinenschaufel nach Anspruch 1 oder 2, wobei der Torsionsbereich (110) einen rechteckigen Querschnitt aufweist und sich im Wesentlichen parallel zu den einander gegenüberliegenden Plattformseiten, der Druck- und der Saugseite (114, 116), erstreckt.

5. Turbinenschaufel nach Anspruch 1 oder 2, wobei der Torsionsbereich (100) einen rechteckigen Querschnitt aufweist und sich im Wesentlichen senkrecht zu den einander gegenüberliegenden Plattformseiten, der Druck- und der Saugseite (104, 106), erstreckt.

6. Verfahren zur Trennung der Drehmomentverläufe eines Schaufelblattteils (22) einer Turbinenschaufel (10) von dem Kontaktdruck an den Koppelflächen benachbarter integrierter Schaufelspitzen-Deckbänder (24) umfassend:
(a) Festlegen eines gewünschten Kontaktdrucks an den Koppelflächen der Spitzen-Deckbänder (24) benachbarter Schaufeln, **gekennzeichnet durch**:
(b) Ausbildung eines Torsionsbereichs (30) mit einem reduzierten Querschnittsbereich in einem massiven Schaftteil (16) jeder Schaufel, wobei dieser Torsionsbereich (30) radial zwischen einem Schaufel-Schwalbenschwanz-Montageteil (12) und einer dem Schaufelblattteil benachbarten Schaufelplattform (20) angeordnet ist, und
(c) Aufbringen eines Drehmoments auf ausschließlich den genannten Torsionsbereich (30) während der Montage einer Vielzahl von Turbinenschaufeln auf einem Laufrad, um den gewünschten Kontaktdruck an den Koppelflächen der Spitzen-Deckbänder zu erzielen.

7. Verfahren nach Anspruch 6, wobei der Torsionsbereich (30) des Schaftteils (16) einen Querschnittsbereich aufweist, der kleiner als die Plattform (20) und der auf der gegenüberliegenden Seite des Torsionsbereichs angeordnete Schwalbenschwanz-Montageteil (12) ist.

8. Verfahren nach Anspruch 6 oder 7, wobei der Torsionsbereich (30) einen kreisförmigen Querschnitt aufweist.

9. Verfahren nach Anspruch 6 oder 7, wobei der Torsionsbereich (124) einen rechteckigen Querschnitt aufweist und sich im Wesentlichen parallel zu den einander gegenüberliegenden Plattformseiten, der Druck- und der Saugseite (114, 116), erstreckt.

10. Verfahren nach Anspruch 6 oder 7, wobei der Torsionsbereich (100) einen rechteckigen Querschnitt aufweist und sich im Wesentlichen senkrecht zu den einander gegenüberliegenden Plattformseiten, der Druck- und der Saugseite (104, 106), erstreckt.

## Revendications

1. Aube (10) de turbine comprenant une partie de tige (16), une partie de montage à queue d'aronde (12) adjacente et radialement intérieure, une partie de surface portante (22) adjacente et radialement extérieure, avec une plate-forme (20) à une extrémité radialement intérieure de ladite partie de surface portante à côté de ladite partie de tige, et un couvercle solidaire (24) à une pointe radialement extérieure de la partie de surface portante, **caractérisée en ce que** :
la partie de tige a une forme destinée à prévoir une zone de couple (30) en coupe transversale réduite dans ladite partie de tige (16), située radialement entre la partie de montage à queue d'aronde (12) et la plate-forme (20), la zone de couple (30) établissant une caractéristique de couple souhaitée pour que l'aube crée, lors de l'insertion dans une rainure en queue d'aronde sur une roue de turbine, une pression de contact souhaitée entre ledit couvercle solidaire (24) et des couvercles adjacents dans une rangée d'aubes similaires lorsque l'on applique le couple seulement dans ladite zone de couple (30).

2. Aube de turbine selon la revendication 1 dans laquelle la zone de couple (30) de la partie de tige (16) présente une zone en coupe transversale plus petite que ladite plate-forme (22) et ladite partie de montage à queue d'aronde (12) sur des côtés opposés de ladite zone de couple.

3. Aube de turbine selon la revendication 1 ou la revendication 2 dans laquelle ladite zone de couple (30) est en coupe transversale circulaire.

4. Aube de turbine selon la revendication 1 ou la revendication 2 dans laquelle ladite zone de couple (110) est en coupe transversale rectangulaire, s'étendant de manière sensiblement parallèle aux côtés d'aspiration et de pression (114, 116) opposés de ladite plate-forme.

5. Aube de turbine selon la revendication 1 ou la revendication 2 dans laquelle ladite zone de couple (100) est en coupe transversale rectangulaire, s'étendant de manière sensiblement perpendiculaire aux côtés d'aspiration et de pression (104, 106) opposés de ladite plate-forme.

6. Procédé destiné à dissocier des caractéristiques de couple d'une partie de surface portante (22) d'une aube (10) de turbine par rapport à une pression de contact au niveau des faces de couplage des couvercles de pointes d'aubes solidaires (24) adjacents consistant à :
(a) déterminer un niveau souhaité de pression de contact au niveau des faces de couplage des couvercles de pointes (24) d'aubes adjacentes ; et consistant à :
(b) former une zone de couple (30) de zone en coupe transversale réduite dans une partie de tige (16) solide de chaque aube, située radialement entre une partie de montage à queue d'aronde (12) d'aube et une plate-forme (20) d'aube à côté de la partie de surface portante ; et
(c) durant l'assemblage d'une pluralité desdites aubes de turbine sur une roue de rotor, à appliquer un couple seulement dans ladite zone de couple (30) pour obtenir la pression de contact souhaitée au niveau des faces de couplage des couvercles de pointe.

7. Procédé selon la revendication 6 dans lequel la zone de couple (30) de la partie de tige (16) présente une zone en coupe transversale plus petite que ladite plate-forme (20) et ladite partie de montage à queue d'aronde (12) sur des côtés opposés de ladite zone de couple.

8. Procédé selon la revendication 6 ou la revendication 7 dans lequel ladite zone de couple (30) est en coupe transversale circulaire.

9. Procédé selon la revendication 6 ou la revendication 7 dans lequel ladite zone de couple (124) est en coupe transversale rectangulaire, s'étendant de manière sensiblement parallèle aux côtés d'aspiration et de pression (114, 116) opposés de ladite plate-forme.

10. Procédé selon la revendication 6 ou la revendication 7 dans lequel ladite zone de couple (100) est en coupe transversale rectangulaire, s'étendant de manière sensiblement perpendiculaire aux côtés d'aspiration et de pression (104, 106) opposés de ladite plate-forme.
